# EUROPEAN PATENT APPLICATION

(11) **EP 4 316 613 A1**
(43) Date of publication of application: **07.02.2024**
(21) Application number: 22781260.9
(22) Date of filing: 31.03.2022
(51) Int. Cl.: A63B 53/10, A63B 102/32

(54) **SHAFT, METHOD FOR MANUFACTURING SAME, AND SHAFT FOR GOLF CLUB**

(30) Priority: 31.03.2021 JP 2021062182
(71) Applicant: Mitsubishi Chemical Corporation, Chiyoda-ku Tokyo 100-8251 (JP)
(72) Inventor: MATSUBARA, Kae, Toyohashi-shi, Aichi 440-8601 (JP); HAYASHI, Takahiro, Tokyo 100-8251 (JP)
(74) Representative: Hoffmann Eitle
(86) International application number: PCT/JP2022/016646
(87) International publication number: WO 2022/211050

(57) **Abstract**

A shaft (10) comprises a plurality of layers A (11), and at least one layer B (12), wherein the layer A (11) comprises a cured product of a thermosetting resin, and the layer B (12) comprises a thermoplastic resin and a continuous fiber substrate, and the at least one layer B (12) is disposed between two layers A (11).

## Description

### BACKGROUND OF THE INVENTION

### Field of the Invention

The present invention relates to a shaft, a method for manufacturing the shaft, and a golf club shaft configured of the shaft.

Priority is claimed on Japanese Patent Application No. 2021-062182, filed in Japan on March 31, 2021, the entire contents of which are incorporated herein by reference.

### Description of Related Art

In the related art, a shaft in which only fiber-reinforced resin layers containing a thermosetting resin and fibers are laminated is known. Such a shaft is used for a golf club shaft or the like (see, for example, Patent Document 1).

The shaft is manufactured by a sheet wrap molding method. In the sheet wrap molding method, a prepreg is wound around a core metal called a mandrel. This is a method of obtaining a shaft by heat-curing the wound prepreg (see, for example, Patent Document 2).

### Citation List

### Patent Documents

Patent Document 1: Japanese Unexamined Patent Application, First Publication No. 2009-189554
Patent Document 2: Japanese Unexamined Patent Application, First Publication No. 2000-127254

### SUMMARY OF THE INVENTION

A prepreg containing a thermoplastic resin as a matrix resin (thermoplastic resin prepreg) has high bending rigidity, low tackiness, and inferior drapeability compared to a prepreg containing a thermosetting resin as a matrix resin (thermosetting resin prepreg). Therefore, it is difficult to mold the thermoplastic resin prepreg by following a shape of the mandrel, and, when the thermoplastic resin prepreg is wound around the mandrel by a sheet wrap method without being able to follow the shape sufficiently, interlayer peeling may occur before and after the molding.

When a shaft having a high torsional strength is put into practical use, it is necessary to increase the number of the laminated fiber-reinforced resin layers containing the thermosetting resin and fibers.

However, when the number of the laminated fiber-reinforced resin layers is increased, there is a concern that a weight of the entire shaft increases.

The present invention has been made in view of the above-described circumstances, and an object of the present invention is to provide a method for manufacturing a shaft wound with a thermoplastic resin prepreg, which has not been able to be wound in a shaft shape in the related art. In addition, an object of the present invention is to provide a shaft whose weight is reduced while maintaining a high torsional strength, a method for manufacturing the shaft, and a golf club shaft configured of the shaft.

A configuration of the present invention which achieves the above-described object is as follows.
[1] A shaft comprising:
   a plurality of layers A; and
   at least one layer B,
   wherein the layer A comprises a cured product of a thermosetting resin, and the layer B comprises a thermoplastic resin and a continuous fiber substrate, and
   the at least one layer B is disposed between two layers A.
[2] The shaft according to [1],
   wherein the continuous fiber substrate is a fabric substrate or a unidirectional fiber substrate.
[3] The shaft according to [1] or [2],
   wherein the layer A is a fiber-reinforced resin layer comprising a continuous fiber substrate.
[4] The shaft according to [3],
   wherein the continuous fiber substrate comprised in the layer A is a fabric substrate or a unidirectional fiber substrate.
[5] The shaft according to any one of [1] to [4],
   wherein the thermoplastic resin comprises polyetherimide.
[6] The shaft according to any one of [1] to [5],
   wherein the thermosetting resin comprises an epoxy resin.
[7] The shaft according to any one of [1] to [6],
   wherein the continuous fiber substrate comprised in the layer B comprises carbon fibers.
[8] The shaft according to any one of [1] to [7],
   wherein a content of the thermoplastic resin is 1 mass% or more and 80 mass% or less with respect to a total mass of the thermosetting resin and the thermoplastic resin.
[9] The shaft according to any one of [1] to [8],
   wherein a ratio of a thickness of the layer B to a sum of thicknesses of the layers A and the thickness of the layer B (the thickness of the layer B/the sum of the thicknesses of the layers A and the thickness of the layer B) is 0.5% or more and 90% or less.
[10] The shaft according to any one of [1] to [9],
   wherein the shaft is hollow.
[11] The shaft according to any one of [1] to [10],
   wherein the layer A is disposed as an outermost layer.
[12] The shaft according to [11],
   wherein the layers A and the layer B are disposed in an order of the layer A, the layer B, and the layer A.
[13] A golf club shaft configured of the shaft according to any one of [1] to [12].
[14] A method for manufacturing a shaft comprising a plurality of layers A, and at least one layer B, in which the layer A comprises a cured product of a thermosetting resin, and the layer B comprises a thermoplastic resin and a continuous fiber substrate, the method comprising:
   a step of forming a laminate of a prepreg by winding a thermosetting resin sheet a to be the layer A and a prepreg b to be the layer B around an outer periphery of a mandrel along a shape of the mandrel in an order of the prepreg b and the thermosetting resin sheet a from a mandrel side;
   a step of heating the laminate; and
   a step of separating the heated laminate from the mandrel.
[15] The method for manufacturing a shaft according to [14],
   wherein the layer B is disposed between two layers A.
[16] The method for manufacturing a shaft according to [14] or [15],
   wherein the shaft is hollow.
[17] The method for manufacturing a shaft according to [16],
   wherein the layer B is disposed on a hollow side with respect to at least one layer A.
[18] A method for manufacturing a shaft, the method comprising:
   a step of forming a laminate of a prepreg by winding a thermosetting resin sheet a comprising a thermosetting resin and fibers and a prepreg b comprising a thermoplastic resin and fibers around an outer periphery of a mandrel along a shape of the mandrel in an order of the prepreg b and the thermosetting resin sheet a from a mandrel side; and
   a step of heating the laminate.
[19] A method for manufacturing a shaft, the method comprising:
   a step of winding a thermosetting resin sheet a comprising a thermosetting resin and a prepreg b comprising a thermoplastic resin and fibers around an outer periphery of a mandrel along a shape of the mandrel in an order of the thermosetting resin sheet a and the prepreg b from a mandrel side to form a laminate comprising a portion where the thermosetting resin sheet a and the prepreg b are in contact with each other.
[20] The method for manufacturing a shaft according to [19], further comprising:
   a step of heating the laminate.
[21] A method for manufacturing a shaft, the method comprising:
   a step of winding a thermosetting resin sheet a comprising a thermosetting resin and a prepreg b comprising a thermoplastic resin and fibers around an outer periphery of a mandrel along a shape of the mandrel in an order of the thermosetting resin sheet a and the prepreg b from a mandrel side and winding the thermosetting resin sheet a and the prepreg b in an overlapping manner such that the prepreg b is in direct contact with the thermosetting resin sheet a to form a laminate of the thermosetting resin sheet a and the prepreg b.
[22] A method for manufacturing a shaft, the method comprising:
   a step of forming a wound body in which a laminated sheet obtained by laminating a thermosetting resin sheet a comprising a thermosetting resin and a prepreg b comprising a thermoplastic resin and fibers is wound around an outer periphery of a mandrel along a shape of the mandrel.
[23] The method for manufacturing a shaft according to [22],
   wherein, when the laminated sheet is wound, the thermosetting resin sheet a is wound such that the thermosetting resin sheet a is disposed inside the shaft.
[24] The method for manufacturing a shaft according to [22] or [23], further comprising:
   a step of heating the wound body.
[25] The method for manufacturing a shaft according to any one of [22] to [24], further comprising:
   a step of further winding a thermosetting resin sheet a2 that is a different sheet from the thermosetting resin sheet a around the shaft around which the laminated sheet is wound.
[26] The method for manufacturing a shaft according to any one of [22] to [25],
   wherein the laminated sheet is wound such that the thermosetting resin sheet a and the prepreg b are disposed in this order from a mandrel side.
[27] The method for manufacturing a shaft according to [22],
   wherein the laminated sheet further comprises the thermosetting resin sheet a, and the laminated sheet is wound such that the thermosetting resin sheet a, the prepreg b, and the thermosetting resin sheet a are disposed in this order from a mandrel side.
[28] The method for manufacturing a shaft according to any one of [22] to [27],
   wherein a position of an edge portion of the thermosetting resin sheet a, which is a start end of the winding around the outer periphery of the mandrel, is different from a position of an edge portion of the prepreg b, which is a start end of the winding around the outer periphery of the mandrel.
[29] The method for manufacturing a shaft according to any one of [25] to [28],
   wherein a position of an edge portion of the thermosetting resin sheet a2, which is a start end of the winding around the outer periphery of the mandrel, is different from a position of an edge portion of the prepreg b, which is a start end of the winding around the outer periphery of the mandrel.
[30] The method for manufacturing a shaft according to any one of [22] to [29],
   wherein an area where the thermosetting resin sheet a and the prepreg b are in contact with each other is 10% or more with respect to an area of the prepreg b.
[31] The method for manufacturing a shaft according to any one of [22] to [30],
   wherein the thermosetting resin sheet a comprises fibers.
[32] The method for manufacturing a shaft according to any one of [22] to [31],
   wherein a fiber volume fraction of the fibers comprised in the prepreg b is 30 vol% or more.
[33] The method for manufacturing a shaft according to any one of [22] to [32],
   wherein a ratio of a thickness of one prepreg b to a thickness of one thermosetting resin sheet a (the thickness of the prepreg b/the thickness of the thermosetting resin sheet a) is 1.5 or less.
[34] The method for manufacturing a shaft according to any one of [22] to [33],
   wherein a length of the fibers comprised in the prepreg b is 1% or more of a length of the shaft.
[35] The method for manufacturing a shaft according to any one of [22] to [34],
   wherein a ratio of a length in a width direction of the thermosetting resin sheet a to a radius of the shaft (the length in the width direction of the thermosetting resin sheet a/the radius of the shaft) is 0.5 or more.
[36] The method for manufacturing a shaft according to any one of [22] to [35],
   wherein the thermosetting resin comprised in the thermosetting resin sheet a is an epoxy resin.
[37] The method for manufacturing a shaft according to any one of [22] to [36],
   wherein the thermoplastic resin comprised in the prepreg b is polyetherimide.
[38] The method for manufacturing a shaft according to [31],
   wherein the fibers comprised in the thermosetting resin sheet a comprise carbon fibers.
[39] The method for manufacturing a shaft according to any one of [22] to [38],
   wherein the fibers comprised in the prepreg b comprise carbon fibers.
[40] The method for manufacturing a shaft according to any one of [22] to [39],
   wherein the prepreg b is disposed so as to be present at a position within 50% from an innermost side of the laminated sheet with respect to a thickness of the laminated sheet.

According to the present invention, it is possible to provide a shaft whose weight is reduced while maintaining a high torsional strength, a method for manufacturing the shaft, and a golf club shaft configured of the shaft.

### BRIEF DESCRIPTION OF THE DRAWINGS

FIG. 1 is a cross-sectional view along a longitudinal direction of a shaft according to an embodiment of the present invention.
FIG. 2 is a cross-sectional view along a direction perpendicular to the longitudinal direction of the shaft according to the embodiment of the present invention.
FIG. 3 is a cross-sectional view along a direction perpendicular to the longitudinal direction of the shaft according to the embodiment of the present invention.
FIG. 4 is a cross-sectional view along a direction perpendicular to the longitudinal direction of the shaft according to the embodiment of the present invention.
FIG. 5 is a cross-sectional view along a direction perpendicular to the longitudinal direction of the shaft according to the embodiment of the present invention.
FIG. 6 is a cross-sectional view along a direction perpendicular to the longitudinal direction of the shaft according to the embodiment of the present invention.
FIG. 7 is a cross-sectional view along a direction perpendicular to the longitudinal direction of the shaft according to the embodiment of the present invention.
FIG. 8 is a cross-sectional view along a direction perpendicular to the longitudinal direction of the shaft according to the embodiment of the present invention.
FIG. 9 is a plan view of the shaft according to the embodiment of the present invention.
FIG. 10 is a plan view of the shaft according to the embodiment of the present invention.
FIG. 11 is a plan view of the shaft according to the embodiment of the present invention.
FIG. 12 is a cross-sectional view along a direction perpendicular to the longitudinal direction of the shaft according to the embodiment of the present invention.
FIG. 13 is a cross-sectional view along a direction perpendicular to the longitudinal direction of the shaft according to the embodiment of the present invention.
FIG. 14 is a cross-sectional view along a direction perpendicular to the longitudinal direction of the shaft according to the embodiment of the present invention.
FIG. 15 is a plan view showing a position where a layer B is disposed in the shaft according to the embodiment of the present invention.
FIG. 16 is a plan view showing a position where the layer B is disposed in the shaft according to the embodiment of the present invention.
FIG. 17 is a plan view showing a position where the layer B is disposed in the shaft according to the embodiment of the present invention.
FIG. 18 is a plan view showing a position where the layer B is disposed in the shaft according to the embodiment of the present invention.
FIG. 19 is a plan view showing a position where the layer B is disposed in the shaft according to the embodiment of the present invention.
FIG. 20 is a plan view showing a position where the layer B is disposed in the shaft according to the embodiment of the present invention.
FIG. 21 is a schematic diagram showing positions of an edge portion of a prepreg and an edge portion of a thermosetting resin sheet.
FIG. 22 is a schematic diagram showing positions of the edge portion of the prepreg and the edge portion of the thermosetting resin sheet.
FIG. 23 is a schematic diagram showing a ratio of a total length L in which the prepreg and the thermosetting resin sheet are in contact with each other to a radius r from a center of the shaft to an outermost surface of the thermosetting resin sheet with which the prepreg is in contact.
FIG. 24 is a schematic diagram showing a shape of a mandrel used in manufacturing the shaft according to the embodiment of the present invention.
FIG. 25 is a pattern diagram showing a shape of a prepreg used in manufacturing the shaft according to the embodiment of the present invention.
FIG. 26 is a schematic diagram of a golf club shaft according to the embodiment of the present invention.

### DETAILED DESCRIPTION OF THE INVENTION

An embodiment of a shaft according to the present invention, a method for manufacturing the shaft, and a golf club shaft configured of the shaft will be described.

The present embodiment is specifically described to give a better understanding of the purpose of the present invention, and is not intended to limit the present invention unless otherwise specified.

### [Shaft]

A shaft according to the embodiment of the present invention includes a plurality of layers A, and at least one layer B, in which the layer A contains a cured product of a thermosetting resin, and the layer B contains a thermoplastic resin and a continuous fiber substrate, and the at least one layer B is disposed between two layers A.

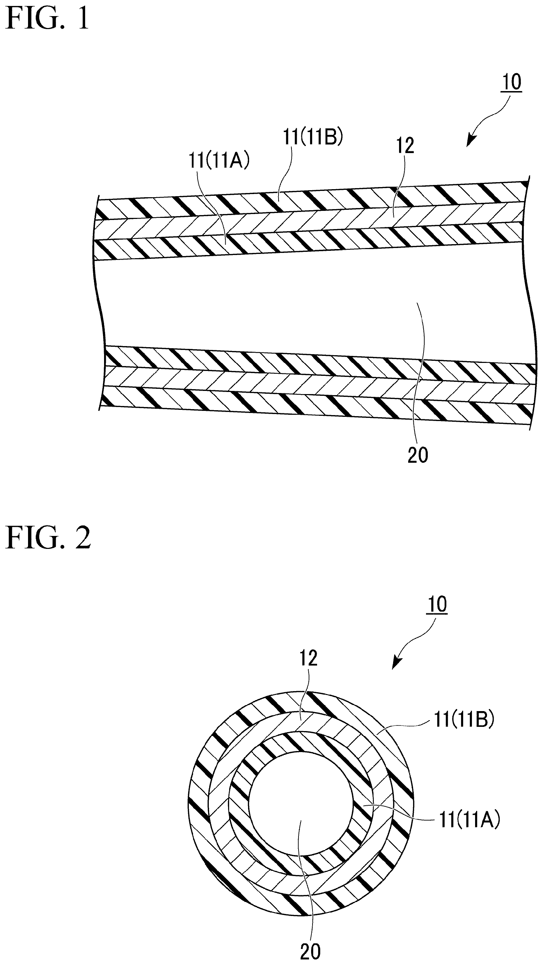

A shaft according to the present embodiment will be described with reference to FIGS. 1 and 2.

FIG. 1 is a cross-sectional view along a longitudinal direction of the shaft according to the present embodiment. FIG. 2 is a cross-sectional view along a direction perpendicular to the longitudinal direction of the shaft according to the present embodiment.

A shaft 10 according to the present embodiment shown in FIG. 1 has two layers A11 (11A and 11B) and one layer B12. In the shaft 10 according to the present embodiment, the one layer B12 is disposed between the two layers A11A and A11B. The shaft 10 has a hollow portion 20 in the center.

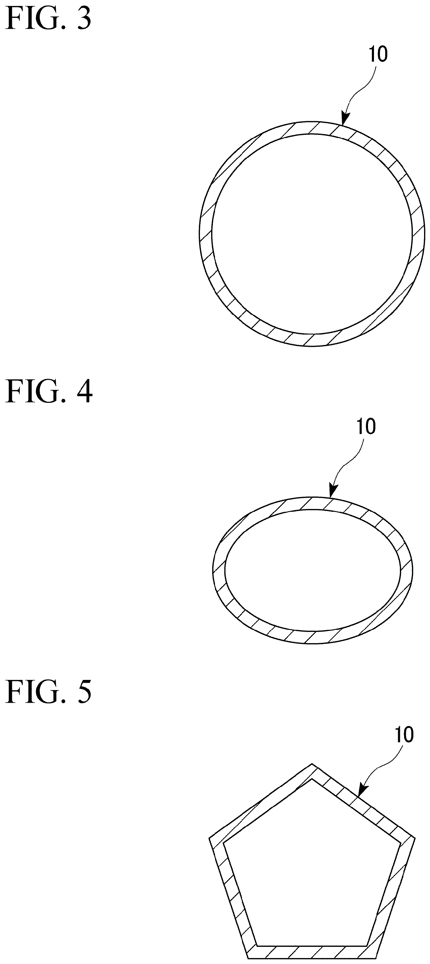

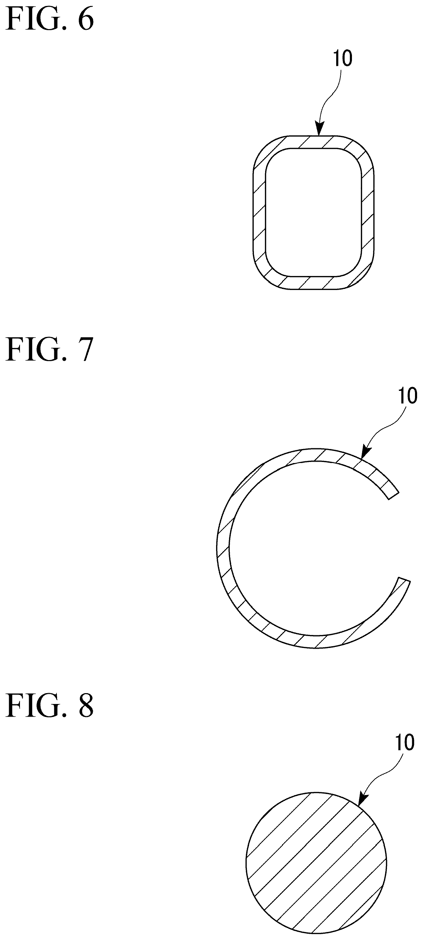

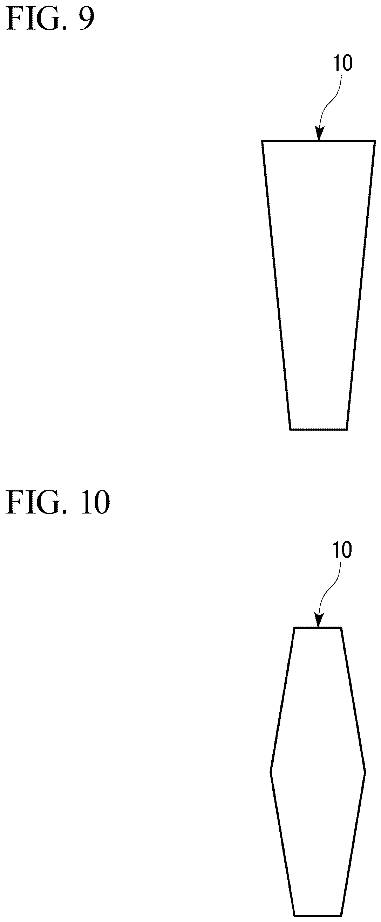

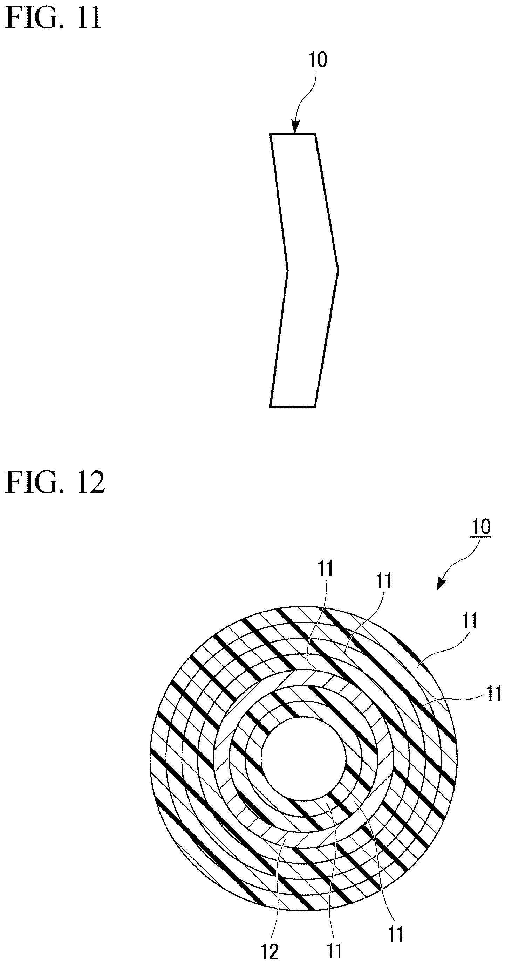

A shape of the shaft 10 may be such that a cross section along the direction perpendicular to the longitudinal direction is circular as shown in FIG. 3, is elliptical as shown in FIG. 4, is polygonal as shown in FIG. 5, and is polygonal with rounded corners as shown in FIG. 6. In addition, the shape of the shaft 10 may be such that the cross section along the direction perpendicular to the longitudinal direction need not be completely connected as shown in FIG. 7, and the inside need not be hollow as shown in FIG. 8. In addition, the shaft 10 may change in thickness in the longitudinal direction as shown in FIG. 9, may gradually change in thickness as shown in FIG. 10, and may be curved or bent in the longitudinal direction as shown in FIG. 11.

A thermoplastic resin prepreg has inferior drapeability and low surface tackiness compared to a thermosetting resin prepreg, so that the thermoplastic resin prepreg is difficult to be rounded when being molded into a tubular shape. For such a reason, in the related art, in the sheet wrap molding method, the layer B containing a thermoplastic resin and a continuous fiber substrate has not been able to be formed in the shaft. In the present embodiment, a structure (A-B-A structure) is adopted in which the one layer B12 is disposed between the two layers A11A and A11B, whereby the layer B12 can be sandwiched between the layers A11 and fixed, so that it is possible to obtain a shaft that can be molded into a tubular shape, has a high strength, and has excellent molding accuracy. By adopting the A-B-A structure, excellent productivity is also achieved.

In addition, a structure (A-B structure) in which the layers A and the layer B are in contact with each other and the structure (A-B-A structure) in which the one layer B 12 is disposed between the two layers A11A and A11B are adopted, whereby the layer B12 is sandwiched between the layers A11 and fixed, so that it is possible to suppress interlayer peeling even when molded into a tubular shape. By adopting the A-B structure, it is possible to obtain a shaft having a high strength and excellent molding accuracy. In addition, by adopting the A-B-A structure, the sheet wrap molding method can be applied, so that productivity of the shaft including the layer B is also excellent.

In the shaft 10 according to the present embodiment, a ratio of a thickness of the layer B 12 to a sum of thicknesses of the layers A11 and the thickness of the layer B 12 (in the shaft 10 shown in FIGS. 1 and 2, a sum of a thickness of the layer A11A, a thickness of the layer A11B, and a thickness of the layer B 12) (the thickness of the layer B12/the sum of the thicknesses of the layers A11 and the thickness of the layer B12) is preferably 0.5% or more and 90% or less, more preferably 1% or more and 70% or less, still more preferably 2% or more and 50% or less, and particularly preferably 5% or more and 20% or less. When the thickness ratio is the lower limit value or more, a torsional strength is improved. When the thickness ratio is the upper limit value or less, excellent moldability is achieved.

In the shaft 10 according to the present embodiment, as shown in FIGS. 1 and 2, it is preferable that the layer B12 is disposed on the hollow portion 20 side with respect to the layer A11B. Thereby, the torsional strength of the shaft 10 can be further improved. Although it is preferable that the layer B 12 is disposed on the hollow portion 20 side with respect to at least one layer A11, the layer B 12 may be disposed on the hollow portion 20 side with respect to the two or more layers A11. The layer A11 is preferably an outermost layer on a side opposite to the hollow portion.

In the shaft 10 according to the present embodiment, as shown in FIGS. 1 and 2, it is preferable that the layer A11A, the layer B12, and the layer A11B are disposed in this order. Thereby, even when the layer B12 containing a thermoplastic resin, which has low adhesiveness to the layer A11 containing a cured product of a thermosetting resin, is formed, the layer B 12 can be sandwiched between the layer A11A and the layer A11B and fixed. As a result, the torsional strength of the shaft 10 can be further improved.

The layers A11 and the layer B 12 can be formed by winding a thermosetting resin sheet or a prepreg.

By disposing a thermosetting resin sheet a on an outside of a prepreg b, the thermosetting resin sheet a fixes the prepreg b from the outside, which makes it easier to wind the prepreg b in a shaft shape.

A laminate of a thermosetting resin sheet a and a prepreg b may be formed by winding a laminated sheet of the prepreg b and the thermosetting resin sheet a, or may be formed by winding the thermosetting resin sheet a after winding the prepreg b. It is preferable that a laminated sheet obtained by laminating a thermosetting resin sheet a inside a prepreg b, the prepreg b, and a thermosetting resin sheet a disposed outside the prepreg b is formed and then wound, thereby firmly fixing the prepreg b. In addition, a laminate in which a thermosetting resin sheet a1, a prepreg b, and a thermosetting resin sheet a2 are wound from a center side of the shaft 10 may be formed by forming a laminated sheet of the thermosetting resin sheet a1 and the prepreg b and then winding the laminated sheet, or may be formed by forming a laminated sheet of the prepreg b and the thermosetting resin sheet a2 and then winding the laminated sheet. In addition, a laminated sheet obtained by laminating a thermosetting resin sheet a1, a prepreg b, and a thermosetting resin sheet a2 may be formed and then wound, or a laminate may be formed by winding the thermosetting resin sheet a1, the prepreg b, and the thermosetting resin sheet a2 in order.

The thermosetting resin sheet a may or may not contain fibers.

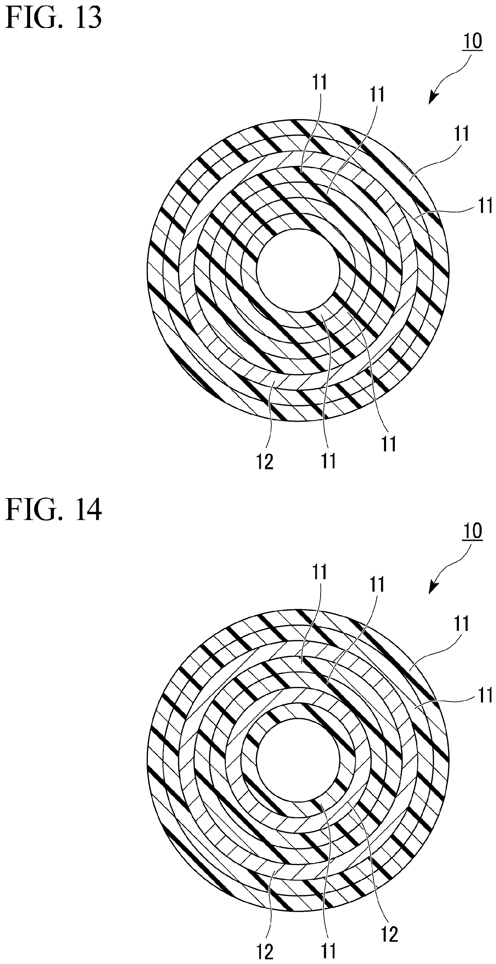

FIGS. 12 to 14 show another example of the shaft 10 according to the present embodiment, and are cross-sectional views along the direction perpendicular to the longitudinal direction of the shaft 10 according to the present embodiment. As shown in FIGS. 12 to 14, as long as the layer B 12 is sandwiched between two layers, the layer B12 may be disposed at any position of the shaft 10, and as shown in FIG. 14, as long as the layer B12 is sandwiched between two layers, there may be a plurality of the layers B12.

### <Layer A>

The layer A11 is formed of a cured product of a thermosetting resin. Although the thermosetting resin is not particularly limited, an epoxy resin is usually used as the thermosetting resin. Examples of the epoxy resin include a bisphenol A type epoxy resin, a bisphenol F type epoxy resin, a bisphenol S type epoxy resin, a phenol novolac type epoxy resin, a cresol novolac type epoxy resin, a glycidylamine type epoxy resin, an isocyanate modified epoxy resin, and an alicyclic epoxy resin. These epoxy resins can be used in liquid to solid forms at room temperature. These epoxy resins may be used alone or in combination of two or more.

The layer A11 may be a fiber-reinforced resin layer containing a cured product of a thermosetting resin and a continuous fiber substrate. The continuous fiber substrate may be replaced by a discontinuous fiber substrate. The layer A11 may be formed of a fiber-reinforced resin which is a cured product of a prepreg containing a thermosetting resin. The prepreg is a resin-impregnated reinforcing fiber sheet obtained by impregnating a resin composition (matrix resin composition) into a reinforcing fiber substrate formed of a fiber material containing a plurality of reinforcing fibers as a sheet. After the prepreg is cut to have a predetermined shape, the prepreg is deformed using a mold or the like and is heated to be cured, resulting in a molded fiber-reinforced resin. A thickness of one prepreg that becomes the layer A after curing is, for example, 30 µm to 250 µm. From the viewpoint of handleability, the thickness is preferably 40 µm to 150 µm. When the layer A contains fibers, a fiber areal weight in the prepreg that becomes the layer A after curing is, for example, 10 g/m² to 300 g/m². From the viewpoint of handleability, the fiber areal weight is preferably 30 g/m² to 250 g/m², and is more preferably 50 g/m² to 220 g/m².

When the layer A contains a continuous fiber substrate, the continuous fiber substrate contained in the layer A11 is preferably a fabric substrate or a unidirectional fiber substrate. Carbon fibers and/or glass fibers can be adopted as reinforcing fibers constituting the continuous fiber substrate contained in the layer A11. Constituting 40% or more of the continuous fiber substrate with carbon fibers is preferable in order to develop physical properties such as strength and rigidity. The continuous fiber substrate may be composed of only carbon fibers or only glass fibers. Note that a fiber-reinforced resin containing only carbon fibers as reinforcing fibers is preferable compared to a fiber-reinforced resin containing only glass fibers as reinforcing fibers because physical properties such as strength and rigidity are favorable. From this point of view, a proportion of a carbon fiber-reinforced resin in the fiber-reinforced resins in the shaft is preferably more than 50 mass% so that the carbon fiber-reinforced resin becomes a main material, more preferably 60 mass% or more, still more preferably 80 mass% or more, and particularly preferably 90 mass% or more.

It is preferable that the resin contained in the layer A11 substantially does not include a thermoplastic resin.

When the layer A11 contains a thermoplastic resin, the thermoplastic resin is preferably 10 mass% or less, more preferably 5 mass% or less, and still more preferably 1 mass% or less with respect to 100 mass% of the resin contained in the layer A11.

The layer A11 contains a thermosetting resin (containing both an uncured resin and a cured product) as a matrix resin, and preferably contains the thermosetting resin as a main component.

From the viewpoint of strength, the thermosetting resin is preferably 50 mass% or more, more preferably 60 mass% or more, still more preferably 80 mass% or more, still more preferably 90 mass% or more, and particularly preferably 95 mass% or more, in the resin components contained in the layer A11.

It is preferable that the resin contained in the thermosetting resin sheet a substantially does not include a thermoplastic resin.

When the thermosetting resin sheet a contains a thermoplastic resin, the thermoplastic resin is preferably 10 mass% or less, more preferably 5 mass% or less, and still more preferably 1 mass% or less with respect to 100 mass% of the resin contained in the thermosetting resin sheet a.

In addition, the thermosetting resin sheet a contains a thermosetting resin (containing both an uncured resin and a cured product) as a matrix resin, and preferably contains the thermosetting resin as a main component.

From the viewpoint of strength, the thermosetting resin is preferably 50 mass% or more, more preferably 60 mass% or more, still more preferably 80 mass% or more, still more preferably 90 mass% or more, and particularly preferably 95 mass% or more, in the resin components contained in the thermosetting resin sheet a.

The more the amount of the thermosetting resin contained in the thermosetting resin sheet a, the higher the tackiness of the thermosetting resin sheet a and the easier it is to wind the prepreg b.

### <Layer B>

The layer B 12 is a fiber-reinforced resin layer containing a thermoplastic resin and a continuous fiber substrate. When the layer B 12 is formed by using a prepreg consisting of a discontinuous fiber substrate as a material instead of a continuous fiber substrate, the layer B12 becomes a fiber-reinforced resin layer containing a thermoplastic resin and a discontinuous fiber substrate. The layer B12 is formed of a fiber-reinforced resin which is a solidified product of the prepreg. A thickness of one prepreg that becomes the layer B after curing is, for example, 10 µm to 250 µm. From the viewpoint of handleability, the thickness of the prepreg is preferably 20 µm to 100 µm. A carbon fiber areal weight in the prepreg that becomes the layer B after curing is, for example, 10 g/m² to 300 g/m². From the viewpoint of handleability, the fiber areal weight is preferably 30 g/m² to 250 g/m², and is more preferably 50 g/m² to 220 g/m². As the thermoplastic resin, polyetherimide, polyether ether ketone, polyether ketone ketone, polyether sulfone, polyphenylene sulfone, polyamide, polyphenylene sulfide, and polycarbonate are used. Among these, polyetherimide is preferable from the viewpoint of improving the torsional strength.

The layer B 12 contains a thermoplastic resin as a matrix resin, and preferably contains the thermoplastic resin as a main component.

The thermoplastic resin is preferably 50 mass% or more, more preferably 60 mass% or more, still more preferably 80 mass% or more, still more preferably 90 mass% or more, and particularly preferably 95 mass% or more, in the resin components contained in the layer B 12. As the content of the thermoplastic resin increases, the torsional strength and a threading failure angle of the shaft are improved.

When the layer B 12 contains a thermoplastic resin, it is preferable that the resin contained in the layer B 12 substantially does not include a thermosetting resin. The thermosetting resin is preferably 10 mass% or less, more preferably 5 mass% or less, and still more preferably 1 mass% or less with respect to 100 mass% of the resin contained in the layer B.

The prepreg b contains a thermoplastic resin as a matrix resin, and preferably contains the thermoplastic resin as a main component.

The thermoplastic resin is preferably 50 mass% or more, more preferably 60 mass% or more, still more preferably 80 mass% or more, still more preferably 90 mass% or more, and particularly preferably 95 mass% or more, in the resin components contained in the prepreg b. As the content of the thermoplastic resin increases, the torsional strength and a threading failure angle of the shaft are improved.

When the prepreg b contains a thermoplastic resin, it is preferable that the resin contained in the prepreg b substantially does not include a thermosetting resin.

The thermosetting resin is preferably 10 mass% or less, more preferably 5 mass% or less, and still more preferably 1 mass% or less with respect to 100 mass% or the resin contained in the prepreg b.

The continuous fiber substrate contained in the layer B12 is preferably a fabric substrate or a unidirectional fiber substrate. Carbon fibers and/or glass fibers can be adopted as reinforcing fibers constituting the fiber substrate contained in the layer B12, as with the fibers contained in the layer A11.

A length of the fibers is preferably 1% or more, more preferably 10% or more, still more preferably 30% or more, still more preferably 50% or more, still more preferably 90% or more, still more preferably 95% or more, and particularly preferably 100% or more, with respect to the entire length of the shaft. It is preferable that the length of the fibers is longer, because a tensile strength of the shaft is improved.

In addition, the length of the fibers is preferably 10 mm or more, more preferably 25 mm or more, and still more preferably 50 mm or more. It is preferable that the length of the fibers is longer, because a tensile strength of the shaft is improved.

The length of the fibers can be 1200 mm or less, 1070 mm or less, and 1000 mm or less.

When the fibers contained in the layer B 12 are continuous fibers, a thickness of the fiber-reinforced resin layer can be reduced while maintaining a high fiber volume fraction. Thereby, the torsional strength and the threading failure angle can be improved while maintaining a light weight. A fiber volume fraction of the prepreg b is preferably 10 vol% or more, more preferably 20 vol% or more, still more preferably 30 vol% or more, still more preferably 40 vol% or more, and particularly preferably 50 vol% or more. It is preferable that the fiber volume fraction is higher, because the torsional strength and the threading failure angle are improved.

The fiber volume fraction of the prepreg b is preferably 80 vol% or less, more preferably 75 vol% or less, and still more preferably 65 vol% or less.

The layer B 12 may be in the form of a continuous tape, a towpreg, or weave.

The fibers contained in the layer B 12 may be in the form of short fibers. The prepreg to be the layer B 12 may be cut into short fibers, or a deposit of short fibers may be impregnated with a thermoplastic resin to form the prepreg to be the layer B 12.

A thermoplastic fiber-reinforced resin layer that is molded by injection molding and is disposed has a low fiber volume fraction compared to a prepreg that is wound by sheet wrap molding and is impregnated with a thermoplastic resin. Therefore, when the thermoplastic fiber-reinforced resin layer molded by injection molding is disposed with the same thickness as the prepreg that is wound by sheet wrap molding and is impregnated with a thermoplastic resin, the amount of fibers is reduced, and the torsional strength and the threading failure angle are reduced. Therefore, in a shaft where the thermoplastic fiber-reinforced resin layer molded by injection molding is disposed, it is necessary to make the thermoplastic fiber-reinforced resin layer thicker than that of a shaft in which the prepreg is wound by sheet wrap molding. The increase in the thickness of the thermoplastic fiber-reinforced resin layer causes an increase in the weight of the shaft. In addition, since a release agent is applied to an injection molding metal mold and an internal release agent is added to the inside of the resin at the time of injection molding, the thermoplastic fiber-reinforced resin layer may contain a release agent. The release agent contained in the thermoplastic fiber-reinforced resin layer molded by injection molding is likely to cause interlayer peeling, which makes it difficult to develop characteristics of a strength and angle in a threading test described in the section of Examples.

The fiber substrate contained in the layer B 12 is particularly preferably a unidirectional fiber substrate. When the unidirectional fiber substrate is used, the prepreg can be easily wound around a mandrel, which is preferable in terms of manufacturing.

In a case of unidirectional fibers, when an axial direction of the shaft is 0°, the fibers can be wound in a direction of the fibers of 0°, can be wound in a direction of the fibers of 30°, and can be wound in a direction of the fibers of 45°. When wound at an angle of more than 45°, the length of the fibers is preferably 1/8 or more of a circumferential length of the shaft and more preferably 1/4 or more. It is preferable that the length of the fibers is longer, because the torsional strength and the threading failure angle of the shaft are improved. In addition, the length of the fibers is preferably not more than 2 times the circumferential length of the shaft, and more preferably not more than 1 time the circumferential length of the shaft. The shorter the length of the fibers, the easier it is to wind the prepreg.

In addition, a degree of orientation pf of the reinforcing fibers in the layer B12 is preferably 0.5 or more, more preferably 0.6 or more, and still more preferably 0.7 or more. The degree of orientation pf is an index indicating an orientation state of the reinforcing fibers in a specific direction in the layer B12. It is preferable that a value of the degree of orientation pf is larger from the viewpoint of improving the torsional strength and the threading failure angle. A direction of the fibers may be random.

A thickness of one layer B 12 is preferably 0.2 mm or less, more preferably 0.15 mm or less, and still more preferably 0.1 mm or less. As the thickness of the layer B 12 is reduced, the lightness of the shaft can be maintained. In addition, the thickness of the layer B 12 is usually 0.01 mm or more and preferably 0.02 mm or more. The above-described upper and lower limits can be combined in any combination. For example, the thickness is preferably 0.01 mm or more and 0.2 mm or less, more preferably 0.01 mm or more and 0.15 mm or less, and still more preferably 0.02 mm or more and 0.1 mm or less.

In the case of unidirectional fibers, it is preferable that an orientation direction of the fibers is the same direction as the axial direction of the shaft.

An angle formed by the orientation direction of the fibers with respect to the axial direction of the shaft is preferably ±30° or less, more preferably ±20° or less, still more preferably ±10° or less, and particularly preferably ±5° or less. As the angle formed by the orientation direction of the fibers with respect to the axial direction of the shaft decreases, the sheet can be easily wound, which is preferable in terms of manufacturing.

Usually, an angle formed by the unidirectional fibers is within ±5° or less due to an arrangement error or the like.

In the shaft 10 according to the present embodiment, a content of the thermoplastic resin contained in the layer B 12 is preferably 0.5 mass% or more and 90 mass% or less, more preferably 1 mass% or more and 80 mass% or less, still more preferably 2 mass% or more and 50 mass% or less, still more preferably 3 mass% or more and 30 mass% or less, still more preferably 4 mass% or more and 20 mass% or less, and particularly preferably 5 mass% or more and 10 mass% or less with respect to the total mass (100 mass%) of the thermosetting resin contained in the layer A11 and the thermoplastic resin contained in the layer B 12. When the content of the thermoplastic resin is the lower limit value or more, the torsional strength is improved. When the content of the thermoplastic resin is the upper limit value or less, the moldability is improved.

A mass of the layer B 12 is preferably 10 mass% or less, more preferably 9 mass% or less, and still more preferably 8 mass% or less with respect to a mass of the shaft. When the mass of the layer B 12 is within the above-described range with respect to the mass of the shaft, it is possible to improve the torsional strength and the threading failure angle while maintaining the lightness of the shaft. In addition, the mass of the layer B 12 is preferably 1 mass% or more, more preferably 2 mass% or more, and still more preferably 3 mass% or more with respect to the mass of the shaft. When the mass of the layer B 12 is within the above-described range with respect to the mass of the shaft, the torsional strength and the threading failure angle are improved.

In the shaft 10 of the present embodiment, the layer B 12 is preferably disposed in 50% or more of the entire length of the shaft 10, more preferably in 70% or more of the entire length, still more preferably in 90% or more of the entire length, and particularly preferably disposed over the entire length. When the layer B 12 is widely disposed on the shaft 10, the torsional strength is improved.

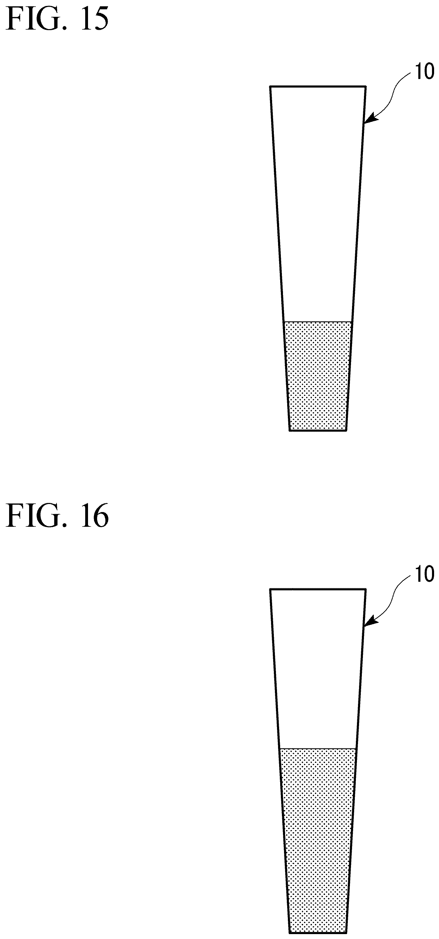

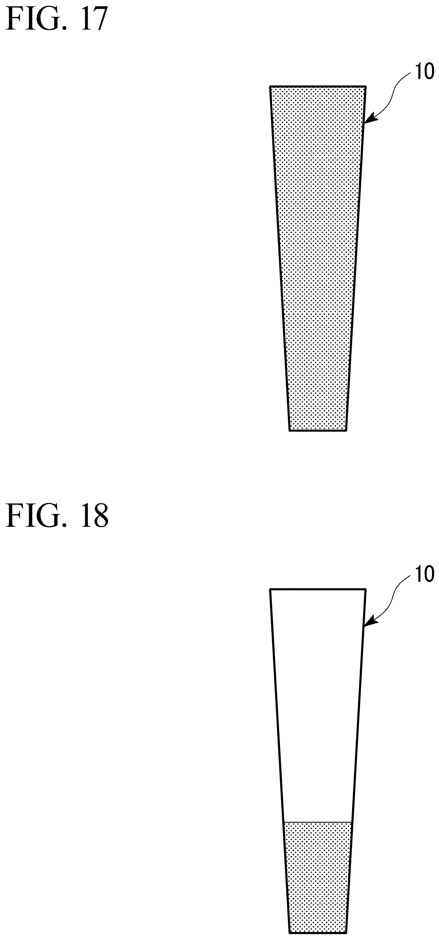

In addition, when a shaft has a taper shape, a position where the layer B 12 is disposed is preferably disposed on a smaller diameter side, that is, on a tip end side of the shaft 10 (a region represented by hatching in FIG. 15 and a region represented by hatching in FIG. 16) as shown in FIGS. 15 and 16, from the viewpoint of improving the torsional strength, and is particularly preferably disposed over the entire length of the shaft 10 as shown in FIG. 17. In FIG. 17, the hatching of the entire region of the shaft 10 represents that the layer B 12 is disposed over the entire length of the shaft 10.

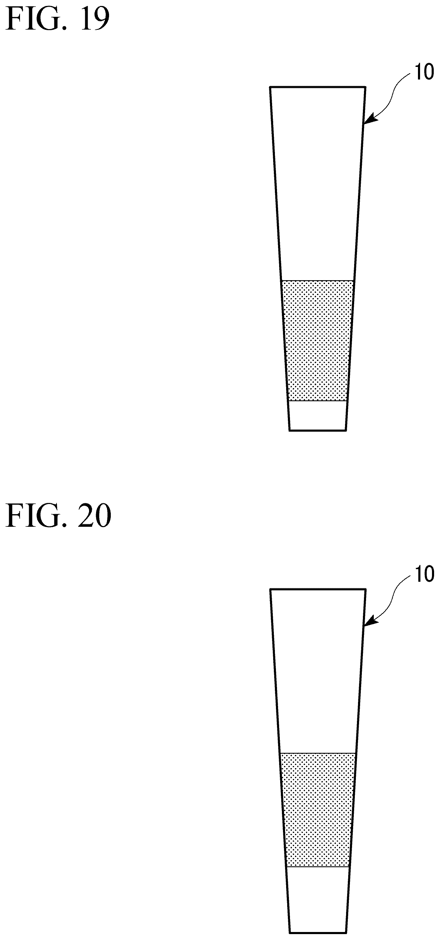

When the layer B 12 is not disposed over the entire length as shown in FIGS. 18 to 20, the layer B12 may be disposed at a distance from a tip end of the shaft 10. From the viewpoint of improving the torsional strength, it is preferable that the layer B 12 is disposed closer to the tip end side.

According to the shaft 10 according to the present embodiment, it is possible to provide a shaft including a plurality of layers A11, and at least one layer B 12, in which the layer A11 contains a cured product of a thermosetting resin, and the layer B12 contains a thermoplastic resin and a continuous fiber substrate. The shaft is reduced in weight while maintaining a high torsional strength because the at least one layer B 12 is disposed between two layers A11A and A11B.

The shaft according to the present embodiment is also suitable as sporting goods, and is suitably used for golf-related articles such as golf clubs and shafts, racket sports-related articles such as tennis rackets and badminton rackets, fishing equipment-related articles such as fishing rods, various leisure articles such as ski poles and tent poles, and other indoor and outdoor sports-related articles.

In addition, the shaft according to the present embodiment is also suitable as a power drive shaft, and is suitably used for drive shafts and propeller shafts of automobiles, ships, and agricultural machines, and shafts for industrial equipment of machine tools and belt conveyors.

In addition, it is suitably used as various frames and pipes in aircraft, automobiles, bicycles, and the like.

In addition to being used as a drive transmission member, the shaft may be used as a pole, a bar, or a rod that does not carry out drive transmission.

### [Method for Manufacturing Shaft]

According to the present embodiment, there is provided a method for manufacturing a shaft including a plurality of layers A, and at least one layer B, in which the layer A contains a cured product of a thermosetting resin, and the layer B contains a thermoplastic resin and a continuous fiber substrate, the method including: a step of forming a laminate of a prepreg by winding a thermosetting resin sheet a to be the layer A and a prepreg b to be the layer B around an outer periphery of a mandrel along a shape of the mandrel (hereinafter, referred to as a "laminate forming step"); a step of heating the laminate (hereinafter, referred to as a "heating step"); and a step of separating the heated laminate from the mandrel (hereinafter, referred to as a "separation step").

In another embodiment, the prepreg b to be the layer B and the thermosetting resin sheet a to be the layer A are wound in this order from the mandrel side. In this case, an adhesive or the like is applied to the mandrel, and the prepreg b is wound. Alternatively, it is preferable to have prepreg fixing means such as winding and fixing a heat-shrinkable tape on the outside of the prepreg b. With the prepreg fixing means, the prepreg b can be wound without being wound around the thermosetting resin sheet a.

For example, when the carbon fiber areal weight of the prepreg is 20 g/m² or less, it is preferable that the prepreg is wound around the mandrel by being overlapped with another prepreg.

The prepreg b and the thermosetting resin sheet a are wound in this order from the mandrel side, so that the prepreg b comes into contact with the thermosetting resin sheet a. When the prepreg b comes into contact with the thermosetting resin sheet a, the prepreg b is fixed by the tackiness of the thermosetting resin sheet a. Thereby, the prepreg b, which has inferior drapeability, can be wound around the outer periphery of the mandrel. When wound around the mandrel, the prepreg b and the thermosetting resin sheet a may be wound after being overlapped, or the prepreg b may be wound after winding the thermosetting resin sheet a. As the thermosetting resin sheet a, a sheet having tackiness can be used, and the thermosetting resin sheet a may be a thermosetting resin sheet or may be a prepreg containing a thermosetting resin as a matrix resin.

In addition, the thermosetting resin sheet a to be wound on the outside of the prepreg b may be wound after forming a laminated sheet with the prepreg b, or the thermosetting resin sheet a may be wound after winding the prepreg b. By winding the laminated sheet of the prepreg b and the thermosetting resin sheet a, the prepreg b can be more easily wound, which is preferable in terms of manufacturing.

When the laminated sheet obtained by laminating the prepreg b and the thermosetting resin sheet a is wound around the mandrel, another prepreg b or a mandrel may come into contact with the inside of the prepreg b.

The outer periphery of the mandrel may be anywhere as long as it is outside the mandrel. For example, a plurality of the thermosetting resin sheets a and the prepreg b may be wound in the order of the mandrel, the thermosetting resin sheet a, the thermosetting resin sheet a, the prepreg b, and the thermosetting resin sheet a.

A material of the mandrel may be a metal, a resin, or a fiber-reinforced resin. When a resin or a fiber-reinforced resin is used, it may be uncured, may be cured, or may be a thermoplastic resin. A surface of the mandrel may be tapered or may not be tapered. When molding a solid shaft, a sheet or a prepreg is wound around a mandrel, and then a shaft including a laminate and the mandrel is molded without pulling out the mandrel. In addition, the mandrel may be pulled out and another member may be inserted to mold a solid shaft.

In the solid shaft, a thermosetting resin may be disposed at the center as the mandrel, and a thermosetting resin sheet a or a prepreg b may be disposed on the outside of the thermosetting resin. When the prepreg b is wound around the thermosetting resin at the center, it is preferable that the prepreg b is disposed so as to be in contact with a thermosetting resin sheet disposed at the center. When disposed in this order, the prepreg b is fixed by the tackiness of the thermosetting resin sheet a, which is preferable in terms of manufacturing.

The layer B 12 is preferably provided between a second layer and a eighth layer from the mandrel, and more preferably provided between a third layer and a seventh layer. The outermost surface of the layer B 12 is preferably within 50%, more preferably within 45%, and still more preferably within 40% from the innermost side of the laminate with respect to a thickness of the laminate. In addition, the innermost side of the layer B 12 is preferably at a position of 5% or more, more preferably at a position of 10% or more, and still more preferably at a position of 15% or more from the innermost side of the laminate. By providing the layer B 12 in the above-described range, the prepreg b can be easily wound at the time of manufacturing. The thickness of the laminate when forming the solid shaft is a distance from the center of the shaft to the outer surface of the shaft. The thickness of the laminate when forming a hollow shaft is a distance from the inner surface of the shaft to the outer surface of the shaft. A distance from the center of the shaft to the outermost surface of the layer B 12 is preferably within 50%, more preferably within 45%, and still more preferably within 40%, with respect to the thickness of the laminate. In addition, a distance from the center of the shaft to the innermost surface of the layer B 12 is preferably at a position of 5% or more of the thickness of the laminate, more preferably at a position of 10% or more of the thickness, and still more preferably at a position of 15% or more of the thickness. By providing the layer B 12 in the above-described range, the prepreg b can be easily wound at the time of manufacturing.

The prepreg b is fixed by the thermosetting resin sheet a by winding the thermosetting resin sheet a and the prepreg b in this order. Thereby, the prepreg b can be wound around the outer periphery of the mandrel.

It is preferable that a surface of the prepreg b that faces the thermosetting resin sheet a is in direct contact with the thermosetting resin sheet a. When the thermosetting resin sheet a and the prepreg b are in direct contact with each other, adhesion between the thermosetting resin sheet a and the prepreg b is strengthened.

A contact area of the thermosetting resin sheet a with respect to an area of the prepreg b is preferably 10% or more, more preferably 30% or more, still more preferably 50% or more, and still more preferably 80% or more. It is particularly preferable that the entire prepreg b is covered with the thermosetting resin sheet a. When the contact area is in the above-described range, the prepreg b is firmly stuck to the thermosetting resin sheet a, which is preferable in manufacturing. It is also preferable because the layer A11 and the layer B 12 are adhered firmly to improve the torsional strength and the threading failure angle.

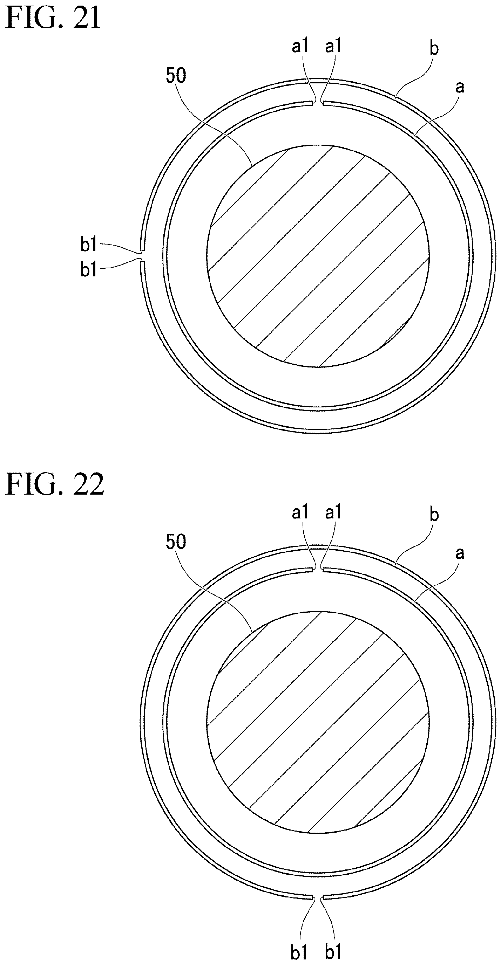

When the prepreg b and the thermosetting resin sheet a are overlapped or wound, as shown in FIG. 21 and FIG. 22, a position of an edge portion b 1 of the prepreg b, which is a start end of the winding around the outer periphery of the mandrel, may not coincide with a position of an edge portion a1 of the thermosetting resin sheet a, which is a start end of the winding around the outer periphery of the mandrel. In addition, when a laminated sheet with the thermosetting resin sheet a is formed or a laminate is formed on the outside of the prepreg b, a position of an edge portion b 1 of the prepreg b, which is a start end of the winding around the outer periphery of the mandrel, may not coincide with a position of an edge portion a1 of the thermosetting resin sheet a, which is a start end of the winding around the outer periphery of the mandrel. Since the position of the edge portion b 1 of the prepreg b does not coincide with the position of the edge portion a1 of the thermosetting resin sheet a, the overlapping between the edge portion b 1 of the prepreg b and the edge portion a1 of the thermosetting resin sheet a does not appear on the appearance of the shaft, so that it is preferable. When the position of the edge portion b 1 of the prepreg b does not coincide with the position of the edge portion a1 of the thermosetting resin sheet a, a contact area of the thermosetting resin sheet a with respect to an area of the prepreg b is preferably 10% or more, more preferably 30% or more, still more preferably 50% or more, and still more preferably 80% or more. It is particularly preferable that the entire prepreg b is covered with the thermosetting resin sheet a. When the contact area is in the above-described range, the layer B is more firmly stuck to the layer A, and the torsional strength is improved.

Similarly, a position of an edge portion of the thermosetting resin sheet a2, which is a start end of the winding around the outer periphery of the mandrel, may not coincide with a position of an edge portion of the prepreg b, which is a start end of the winding around the outer periphery of the mandrel.

It is preferable that at least one of the edge portions b 1 of the prepreg b is in contact with the thermosetting resin sheet a. The edge portion referred to here refers to a portion (winding start edge portion) that is attached to a winding object at the start of the winding, and a portion (winding end edge portion) that finally comes into contact with the winding object at the end of the winding.

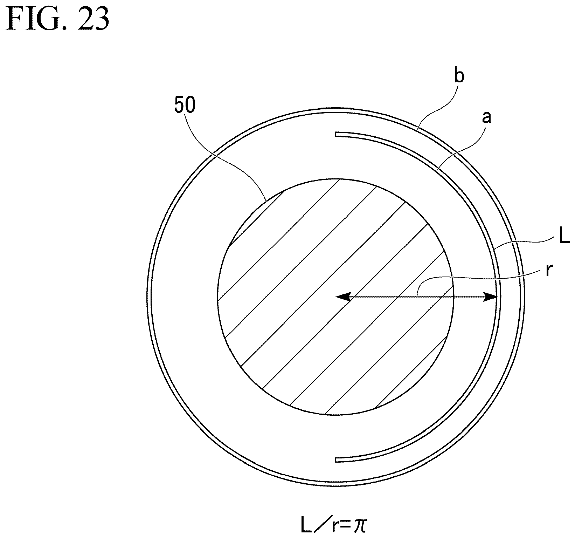

In a cross section perpendicular to the axial direction of the shaft shown in FIG. 23, a ratio (L/r) of a length L in a width direction of the thermosetting resin sheet a to a radius r from the center of the shaft to the outermost surface of the thermosetting resin sheet a with which the prepreg b is in contact is preferably 0.5 or more, more preferably 1 or more, and still more preferably π (circular constant) or more. When the ratio is within the above-described range, the tackiness of the thermosetting resin sheet a counteracts the bending rigidity of the thermosetting resin sheet a of the prepreg b, and the prepreg (b) can be wound.

A ratio of a thickness of one prepreg b to a thickness of one thermosetting resin sheet a (the prepreg b/the thermosetting resin sheet a) is preferably 1.3 or less, more preferably 1.2 or less, and still more preferably 1.1 or less. In addition, the ratio is preferably 0.3 or more, more preferably 0.4 or more, still more preferably 0.5 or more, and particularly preferably 0.6 or more. When the ratio is in the above-described range, the rigidity of the prepreg b is reduced, and the prepreg b can be easily wound.

In addition, a contact length of the layer A11 with respect to a portion of the layer B 12 where a length from an end on a butt side to an end on a tip side in the axial direction of the shaft is the shortest is preferably 10% or more, more preferably 30% or more, still more preferably 50% or more, still more preferably 80% or more, and particularly preferably 100%, with respect to a length of the layer B 12 in the axial direction of the shaft. The case where the contact length is within the above-described range is preferable because the layer B 12 is more firmly stuck to the layer A11 to improve the torsional strength.

A ratio of the thickness of the layer B12 to the thickness of the layer A11 (the layer B/the layer A) is preferably 1.3 or less, more preferably 1.2 or less, and still more preferably 1.1 or less. In addition, the ratio is preferably 0.3 or more, more preferably 0.4 or more, still more preferably 0.5 or more, and particularly preferably 0.6 or more. When the ratio is in the above-described range, the bending rigidity of the prepreg b is reduced, and the prepreg b can be easily wound.

In addition, an area where the layer A11 and the layer B12 are in contact with each other is preferably 10% or more, more preferably 30% or more, still more preferably 50% or more, and still more preferably 80% or more, in an area of the layer B12. It is particularly preferable that the entire layer B12 is in contact with the layer A11. The case where the area is in the above-described range is preferable because the layer A11 and the layer B12 are adhered firmly to improve the torsional strength and the threading failure angle.

A method for manufacturing a shaft according to the present embodiment will be described in detail with reference to a sheet wrapping method as an example.

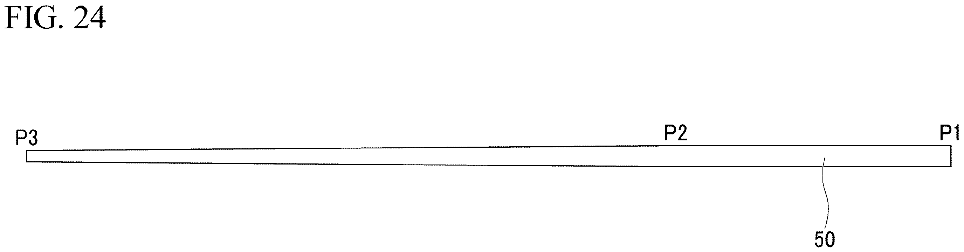

FIG. 24 is a schematic diagram showing a shape of a mandrel used in manufacturing the shaft 10.

An iron mandrel 50 having the shape shown in FIG. 24 is prepared. The mandrel 50 is formed in a cylindrical shape. In the mandrel 50, an outer diameter thereof gradually increases linearly from a small diameter end P3 to a switching point P2, and the outer diameter thereof is constant from the switching point P2 to a large diameter end P1.

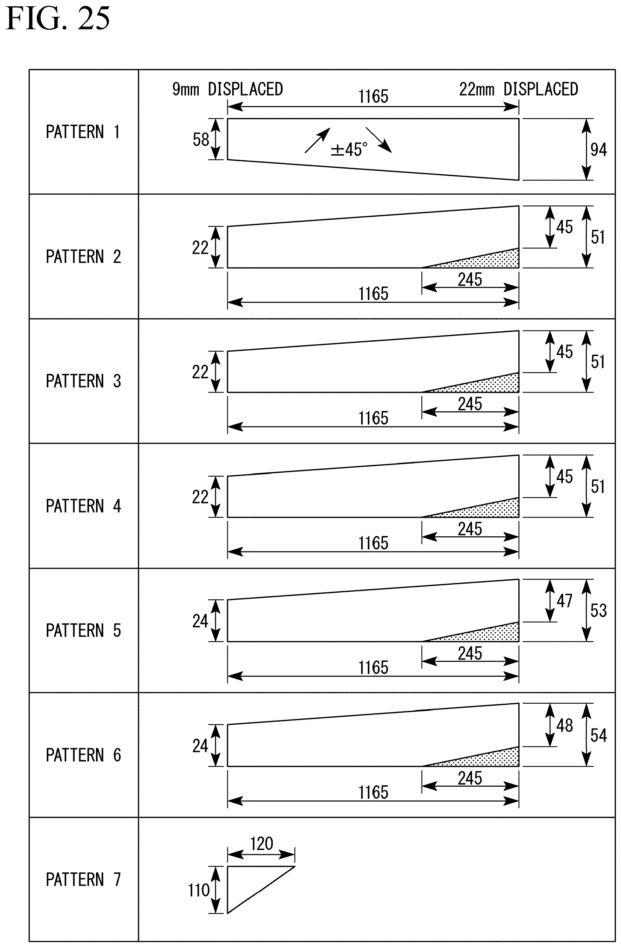

FIG. 25 is a pattern diagram showing a shape of a prepreg used in manufacturing the shaft 10.

In the laminate forming step, prepregs (Patterns 1 to 7) cut to have the shapes shown in FIG. 25 are sequentially wound around the mandrel 50 to form a laminate of the prepregs, and a heat-shrinkable tape made of, for example, polypropylene is wound thereon at a predetermined pitch.

Hereinafter, in the pattern diagram of the prepreg, the unit (mm) is omitted as dimensions of each pattern. In addition, a broken line arrows in each pattern indicate the orientation of the reinforcing fibers in the fiber material. An angle indicated by the broken line arrows represents an angle of the orientation of the reinforcing fibers in the fiber material with respect to the axial direction of the mandrel 50. When there are no broken line arrows in the pattern, it represents that the orientation of the reinforcing fibers in the fiber material is along the axial direction of the mandrel 50.

In Pattern 1, two sheets of a prepreg that forms an angle layer in which the reinforcing fibers in the fiber material are oriented at a winding angle of +45° in the axial direction of the mandrel 50 (hereinafter, simply referred to as a "+45° angle layer") and a prepreg that forms an angle layer in which the reinforcing fibers in the fiber material are oriented at a winding angle of -45° in the axial direction of the mandrel 50 (hereinafter, referred to as a "-45° angle layer") are overlapped to form a bias layer (hereinafter, simply referred to as a "bias layer"). Pattern 1 is wound around the entire surface of the mandrel 50.

Patterns 2 to 6 are formed of a prepreg that forms a straight layer in which the reinforcing fibers in the fiber material are oriented at a winding angle of 0° in the axial direction of the mandrel 50 (hereinafter, simply referred to as a "straight layer"). Each of Patterns 2 to 6 is a layer over the entire length of the shaft 10.

Pattern 7 is formed of a prepreg that forms a straight layer in which the reinforcing fibers in the fiber material are oriented at a winding angle of 0° in the axial direction of the mandrel 50. Pattern 7 is wound around a portion of the mandrel 50 corresponding to an end portion of the shaft 10 on a butt side.

The prepregs of Patterns 1, 2, and 4 to 7 are thermosetting resin sheets a to be the layer A. The prepreg of Pattern 3 is a prepreg b to be the layer B.

In addition, unidirectional lamination may be used, cross lamination may be used, or quasi-isotropic lamination may be used.

In the heating step, the laminate around which the heat-shrinkable tape is wound is put into a heating furnace and heated. As conditions for heating the laminate, for example, the laminate is held at 135°C for 2 hours. When a heating temperature of the laminate is equal to or higher than a melting point of a thermoplastic resin contained in the prepreg of Pattern 3, the thermoplastic resin contained in the prepreg of Pattern 3 can be melted by heating the laminate, and the prepreg of Pattern 3 and the prepregs of other patterns can be adhered. The prepregs of Patterns 1 to 7 are cured or softened. Thus, these prepregs are integrated. Thereafter, the prepregs of Patterns 1 to 7 are cured or solidified by being cooled naturally to room temperature, thereby forming a fiber-reinforced resin layer.

In the separation step, the formed fiber-reinforced resin layer is removed from the mandrel 50, thereby manufacturing the shaft 10.

Thereafter, the heat-shrinkable tape is peeled off from the shaft 10 and the surface of the shaft 10 is polished.

The shaft 10 may be completed by polishing the surface thereof, or the shaft 10 may be completed by decorating the surface after polishing. It is possible to appropriately select whether or not the surface of the shaft 10 according to the present embodiment is decorated.

When the shaft 10 according to the present embodiment is decorated, the surface of the shaft 10 is coated by, for example, ironing or spraying, or is transferred with transfer foil containing metal foil to form a lustrous appearance.

According to the method for manufacturing a shaft according to the present embodiment, it is possible to provide a shaft whose weight is reduced while maintaining a high torsional strength.

### [Golf Club Shaft]

A golf club shaft according to the present embodiment is configured of the shaft of the above-described embodiment.

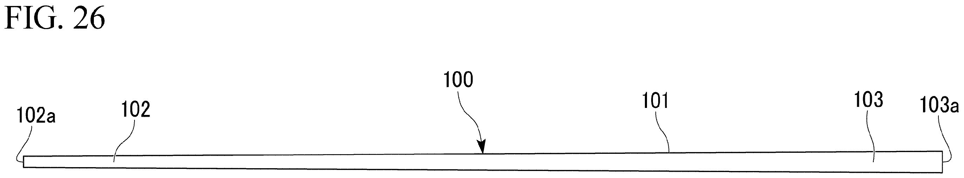

FIG. 26 is a schematic diagram of the golf club shaft according to the present embodiment.

As shown in FIG. 26, a golf club shaft (hereinafter, may also be referred to as a "shaft") 100 according to the present embodiment is formed in a cylindrical shape. The shaft 100 is formed such that an outer diameter of a surface perpendicular to the axial direction gradually increases from one end (the right end in FIG. 24) to the other end (the left end in FIG. 24) in the axial direction. In addition, the shaft 100 may be formed such that the outer diameter thereof is constant from a diameter switching portion 101 in the middle of the axial direction to the other end. Hereinafter, out of both end portions of the shaft 100, an end portion having a smaller outer diameter is referred to as a tip 102 (an end on the tip 102 side out of both ends of the shaft 100 is referred to as a tip end 102a), and an end portion having a larger outer diameter is referred to as a butt 103 (an end on the butt 103 side out of the both ends of the shaft 100 is referred to as a butt end 103a). The butt 103 is a portion to be gripped with a mounted grip, and refers to, for example, a portion of the shaft 100 from the butt end 103a to the diameter switching portion 101.

Since the shaft 100 according to the present embodiment is configured of the shaft of the above-described embodiment, the weight of the shaft 100 can be reduced while maintaining a high torsional strength.

### [Examples]

Hereinafter, the present invention will be described in more detail with reference to Examples and Comparative Example, but the present invention is not limited to Examples described below.

### [Example 1]

### (Production of Shaft)

As a mandrel, a mandrel formed of an iron columnar body was used. Specifically, a columnar body was prepared of which an outer diameter d1 from a position of 20 mm (small diameter end portion) from an end portion, which is a starting point, to a position of 389.3 mm in a longitudinal axis direction was constant at 3.10 mm and gradually expanded from the starting point to a position of 1190 mm in the longitudinal axis direction at a tapering rate of 10.22/1000, and an outer diameter d2 at a position expanded to this maximum diameter was 12.10 mm.

In addition, a prepreg (carbon prepreg: manufactured by Mitsubishi Chemical Corporation) having the shape and dimensions shown in FIG. 13 and having the specifications shown in Table 2 was prepared. Thermoplastic prepregs 1 to 3 were produced as follows. Formulations of the thermoplastic prepregs 1 to 3 are shown in Table 1.

### (Production of Prepreg 1)

Two films 1 having a thickness of 15 µm obtained by extrusion-molding a polyetherimide resin (Ultem 1000 manufactured by SABIC Co., Ltd.) using an extruder and a T-die, and a carbon fiber substrate formed of carbon fibers 1 (MR50R manufactured by Mitsubishi Chemical Corporation) in a sheet shape with a carbon fiber areal weight of 75 g/m² were overlapped, and the films were heat-melted and impregnated into the carbon fiber substrate, thereby producing a fiber-reinforced resin prepreg. The obtained prepreg was a prepreg of which a carbon fiber content is approximately 58 vol%, a resin content is approximately 34 mass%, and a thickness is approximately 72 µm.

### (Production of Prepreg 2)

The film 1, a carbon fiber substrate formed of carbon fibers 2 (MR70 manufactured by Mitsubishi Chemical Corporation) in a sheet shape with a carbon fiber areal weight of 38 g/m², and the film were overlapped, and the films were heat-melted and impregnated into the carbon fiber substrate, thereby producing a fiber-reinforced resin prepreg. The obtained prepreg was a prepreg of which a carbon fiber content is approximately 58 vol%, a resin content is approximately 33 mass%, and a thickness is approximately 36 µm.

### (Production of Prepreg 3)

A film 2 having a thickness of 9 µm obtained by extrusion-molding a polyetherimide resin (Ultem 1000 manufactured by SABIC Co., Ltd.) using an extruder and a T-die, a carbon fiber substrate formed of carbon fibers 2 (MR70 manufactured by Mitsubishi Chemical Corporation) in a sheet shape with a carbon fiber areal weight of 34 g/m², and the film were overlapped, and the films were heat-melted and impregnated into the carbon fiber substrate, thereby producing a fiber-reinforced resin prepreg. The obtained prepreg was a prepreg of which a carbon fiber content is approximately 68 vol%, a resin content is approximately 25 mass%, and a thickness is approximately 28 µm.

**[Table 1]**

| | | Prepreg 1 | Prepreg 2 | Prepreg 3 |
|---|---|---|---|---|
| CF | Type | MR50R | MR70 | MR70 |
| | Density (g/cm³) | 1.80 | 1.82 | 1.82 |
| | FAW (g/m²) | 75 | 38 | 34 |
| PEI | Density (g/cm³) | 1.27 | 1.27 | 1.27 |
| | Resin thickness (µm) | 30 | 15 | 9 |
| | RAW (g/m²) | 38 | 19 | 11 |
| Prepreg | Vf (Vol%) | 58% | 58% | 68% |
| | Rc (wt%) | 34% | 33% | 25% |
| | PAW (g/m²) | 113 | 57 | 45 |
| | CPT (µm) | 72 | 36 | 28 |

These prepregs were wound around the mandrel, and a shaft of Example 1 was manufactured by the above-described method for manufacturing a shaft.

**[Table 2]**

| Pattern | Part number | Areal weight of prepreg [g/m²] | Content of thermoplastic resin with respect to total mass of thermosetting resin and thermoplastic resin [mass%] | Thickness [mm] | Weight [g] | Resin |
|---|---|---|---|---|---|---|
| 1 | TR350E125S | 179 | 0 | 0.113 | 31.61 | Epoxy resin |
| 2 | TR350C075S | 100 | 0 | 0.063 | 4.18 | Epoxy resin |
| 3 | Thermoplastic prepreg 1 | 110 | 32 | 0.067 | 4.60 | Polyetherimide |
| 4 | GH0250 3501M | 61 | 0 | 0.03 | 2.55 | Epoxy resin |
| 5 | TR350E125S | 179 | 0 | 0.113 | 7.91 | Epoxy resin |
| 6 | TR350E125E | 179 | 0 | 0.113 | 7.93 | Epoxy resin |
| 7 | TR350E125S | 179 | 0 | 0.113 | 1.18 | Epoxy resin |

### (Evaluation)

For the obtained shaft, a weight (g), a torsional strength (torque at breakage (kgf·m)), and a threading failure angle (deg) were evaluated. The results are shown in Table 6.

### (1) Weight

The weight of the shaft was measured to two decimal places using a commercially available electronic balance (EK-300i manufactured by A&D Co., Ltd.).

### (2) Torsional strength and Threading Failure Angle

The torsional strength and the threading failure angle were measured using a universal tester manufactured by Mechatronics Engineering Corporation. The measurement could be performed by adhering a small-diameter portion of the shaft to a dedicated jig, setting a large-diameter portion for which a test piece produced by burying a bolt inside the shaft was prepared in a torsional strength measuring device, and applying torsional stress to the shaft.

A breaking load and a breaking angle at the time of breaking were read, and a value obtained by multiplying the breaking load and the breaking angle was calculated as a torsional strength (N·m·degree). In addition, the breaking angle at that time was defined as the threading failure angle.

### [Example 2]

A shaft of Example 2 was manufactured in the same manner as in Example 1 except that a prepreg (carbon prepreg: manufactured by Mitsubishi Chemical Corporation) having the specifications shown in Table 3 was used as Pattern 3.

For the obtained shaft, a weight (g), a torsional strength (torque at breakage (kgf m)), and a threading failure angle (deg) were evaluated. The results are shown in Table 6.

**[Table 3]**

| Pattern | Type of prepreg | Areal weight of prepreg [g/m²] | Content of thermoplastic resin [mass%] | Thickness [mm] | Weight [g] | Resin |
|---|---|---|---|---|---|---|
| 3 | Thermoplastic prepreg 2 | 56 | 32 | 0.038 | 2.34 | Polyetherimide |

### [Example 3]

A shaft of Example 3 was manufactured in the same manner as in Example 1 except that a prepreg (carbon prepreg: manufactured by Mitsubishi Chemical Corporation) having the specifications shown in Table 4 was used as Pattern 3.

For the obtained shaft, a weight (g), a torsional strength (torque at breakage (kgf·m)), and a threading failure angle (deg) were evaluated. The results are shown in Table 6.

**[Table 4]**

| Pattern | Type of prepreg | Areal weight of prepreg [g/m²] | Content of thermoplastic resin [mass%] | Thickness [mm] | Weight [g] | Resin |
|---|---|---|---|---|---|---|
| 3 | Thermoplastic prepreg 3 | 45 | 25 | 0.034 | 1.88 | Polyetherimide |

### [Comparative Example]

A shaft of Comparative Example was manufactured in the same manner as in Example 1 except that a prepreg (carbon prepreg: manufactured by Mitsubishi Chemical Corporation) having the specifications shown in Table 5 was used as Pattern 3.

For the obtained shaft, a weight (g), a torsional strength (torque at breakage (kgf m)), and a threading failure angle (deg) were evaluated. The results are shown in Table 6.

**[Table 5]**

| Pattern | P art number | Areal weight of prepreg [g/m²] | Content of thermoplastic resin [mass%] | Thickness [mm] | Weight [g] | Resin |
|---|---|---|---|---|---|---|
| 3 | MRX350C075R | 100 | 0 | 0.063 | 4.18 | Epoxy resin |

**[Table 6]**

| | Weight [g] | Torsional strength [kgf·m] | Threading failure angle [deg] |
|---|---|---|---|
| Example 1 | 57.5 | 3.08 | 147.8 |
| Example 2 | 53.1 | 2.83 | 137.2 |
| Example 3 | 52.9 | 3.01 | 144.8 |
| Comparative Example | 56.6 | 2.42 | 114.2 |

From the results shown in Table 6, the shafts of Examples 1 to 3, in which Pattern 3 contained a cured product of a thermoplastic resin layer, all had similar or lighter weight and higher torsional strength and threading failure angle, compared to Comparative Example in which all patterns contained a cured product of a thermosetting resin layer.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

The weight of the shaft according to the present invention can be reduced while maintaining a high torsional strength.

## Claims

1. A shaft comprising:
a plurality of layers A; and
at least one layer B,
wherein the layer A comprises a cured product of a thermosetting resin, and the layer B comprises a thermoplastic resin and a continuous fiber substrate, and
the at least one layer B is disposed between two layers A.

2. The shaft according to Claim 1,
wherein the continuous fiber substrate is a fabric substrate or a unidirectional fiber substrate.

3. The shaft according to Claim 1 or 2,
wherein the layer A is a fiber-reinforced resin layer comprising a continuous fiber substrate.

4. The shaft according to Claim 3,
wherein the continuous fiber substrate comprised in the layer A is a fabric substrate or a unidirectional fiber substrate.

5. The shaft according to any one of Claims 1 to 4,
wherein the thermoplastic resin comprises polyetherimide.

6. The shaft according to any one of Claims 1 to 5,
wherein the thermosetting resin comprises an epoxy resin.

7. The shaft according to any one of Claims 1 to 6,
wherein the continuous fiber substrate comprised in the layer B comprises carbon fibers.

8. The shaft according to any one of Claims 1 to 7,
wherein a content of the thermoplastic resin is 1 mass% or more and 80 mass% or less with respect to a total mass of the thermosetting resin and the thermoplastic resin.

9. The shaft according to any one of Claims 1 to 8,
wherein a ratio of a thickness of the layer B to a sum of thicknesses of the layers A and the thickness of the layer B (the thickness of the layer B/the sum of the thicknesses of the layers A and the thickness of the layer B) is 0.5% or more and 90% or less.

10. The shaft according to any one of Claims 1 to 9,
wherein the shaft is hollow.

11. The shaft according to any one of Claims 1 to 10,
wherein the layer A is disposed as an outermost layer.

12. The shaft according to Claim 11,
wherein the layers A and the layer B are disposed in an order of the layer A, the layer B, and the layer A.

13. A golf club shaft configured of the shaft according to any one of Claims 1 to 12.

14. A method for manufacturing a shaft comprising a plurality of layers A, and at least one layer B, in which the layer A comprises a cured product of a thermosetting resin, and the layer B comprises a thermoplastic resin and a continuous fiber substrate, the method comprising:
a step of forming a laminate of a prepreg by winding a thermosetting resin sheet a to be the layer A and a prepreg b to be the layer B around an outer periphery of a mandrel along a shape of the mandrel in an order of the prepreg b and the thermosetting resin sheet a from a mandrel side;
a step of heating the laminate; and
a step of separating the heated laminate from the mandrel.

15. The method for manufacturing a shaft according to Claim 14, wherein the layer B is disposed between two layers A.

16. The method for manufacturing a shaft according to Claim 14 or 15, wherein the shaft is hollow.

17. The method for manufacturing a shaft according to Claim 16,
wherein the layer B is disposed on a hollow side with respect to at least one layer A.

18. A method for manufacturing a shaft, the method comprising:
a step of forming a laminate of a prepreg by winding a thermosetting resin sheet a comprising a thermosetting resin and fibers and a prepreg b comprising a thermoplastic resin and fibers around an outer periphery of a mandrel along a shape of the mandrel in an order of the prepreg b and the thermosetting resin sheet a from a mandrel side; and
a step of heating the laminate.

19. A method for manufacturing a shaft, the method comprising:
a step of winding a thermosetting resin sheet a comprising a thermosetting resin and a prepreg b comprising a thermoplastic resin and fibers around an outer periphery of a mandrel along a shape of the mandrel in an order of the thermosetting resin sheet a and the prepreg b from a mandrel side to form a laminate comprising a portion where the thermosetting resin sheet a and the prepreg b are in contact with each other.

20. The method for manufacturing a shaft according to Claim 19, further comprising:
a step of heating the laminate.

21. A method for manufacturing a shaft, the method comprising:
a step of winding a thermosetting resin sheet a comprising a thermosetting resin and a prepreg b comprising a thermoplastic resin and fibers around an outer periphery of a mandrel along a shape of the mandrel in an order of the thermosetting resin sheet a and the prepreg b from a mandrel side and winding the thermosetting resin sheet a and the prepreg b in an overlapping manner such that the prepreg b is in direct contact with the thermosetting resin sheet a to form a laminate of the thermosetting resin sheet a and the prepreg b.

22. A method for manufacturing a shaft, the method comprising:
a step of forming a wound body in which a laminated sheet obtained by laminating a thermosetting resin sheet a comprising a thermosetting resin and a prepreg b comprising a thermoplastic resin and fibers is wound around an outer periphery of a mandrel along a shape of the mandrel.

23. The method for manufacturing a shaft according to Claim 22,
wherein, when the laminated sheet is wound, the thermosetting resin sheet a is wound such that the thermosetting resin sheet a is disposed inside the shaft.

24. The method for manufacturing a shaft according to Claim 22 or 23, further comprising:
a step of heating the wound body.

25. The method for manufacturing a shaft according to any one of Claims 22 to 24, further comprising:
a step of further winding a thermosetting resin sheet a2 that is a different sheet from the thermosetting resin sheet a around the shaft around which the laminated sheet is wound.

26. The method for manufacturing a shaft according to any one of Claims 22 to 25,
wherein the laminated sheet is wound such that the thermosetting resin sheet a and the prepreg b are disposed in this order from a mandrel side.

27. The method for manufacturing a shaft according to Claim 22,
wherein the laminated sheet further comprises the thermosetting resin sheet a, and the laminated sheet is wound such that the thermosetting resin sheet a, the prepreg b, and the thermosetting resin sheet a are disposed in this order from a mandrel side.

28. The method for manufacturing a shaft according to any one of Claims 22 to 27,
wherein a position of an edge portion of the thermosetting resin sheet a, which is a start end of the winding around the outer periphery of the mandrel, is different from a position of an edge portion of the prepreg b, which is a start end of the winding around the outer periphery of the mandrel.

29. The method for manufacturing a shaft according to any one of Claims 25 to 28,
wherein a position of an edge portion of the thermosetting resin sheet a2, which is a start end of the winding around the outer periphery of the mandrel, is different from a position of an edge portion of the prepreg b, which is a start end of the winding around the outer periphery of the mandrel.

30. The method for manufacturing a shaft according to any one of Claims 22 to 29,
wherein an area where the thermosetting resin sheet a and the prepreg b are in contact with each other is 10% or more with respect to an area of the prepreg b.

31. The method for manufacturing a shaft according to any one of Claims 22 to 30,
wherein the thermosetting resin sheet a comprises fibers.

32. The method for manufacturing a shaft according to any one of Claims 22 to 31,
wherein a fiber volume fraction of the fibers comprised in the prepreg b is 30 vol% or more.

33. The method for manufacturing a shaft according to any one of Claims 22 to 32,
wherein a ratio of a thickness of one prepreg b to a thickness of one thermosetting resin sheet a (the thickness of the prepreg b/the thickness of the thermosetting resin sheet a) is 1.5 or less.

34. The method for manufacturing a shaft according to any one of Claims 22 to 33,
wherein a length of the fibers comprised in the prepreg b is 1% or more of a length of the shaft.

35. The method for manufacturing a shaft according to any one of Claims 22 to 34,
wherein a ratio of a length in a width direction of the thermosetting resin sheet a to a radius of the shaft (the length in the width direction of the thermosetting resin sheet a/the radius of the shaft) is 0.5 or more.

36. The method for manufacturing a shaft according to any one of Claims 22 to 35,
wherein the thermosetting resin comprised in the thermosetting resin sheet a is an epoxy resin.

37. The method for manufacturing a shaft according to any one of Claims 22 to 36,
wherein the thermoplastic resin comprised in the prepreg b is polyetherimide.

38. The method for manufacturing a shaft according to Claim 31,
wherein the fibers comprised in the thermosetting resin sheet a comprise carbon fibers.

39. The method for manufacturing a shaft according to any one of Claims 22 to 38,
wherein the fibers comprised in the prepreg b comprise carbon fibers.

40. The method for manufacturing a shaft according to any one of Claims 22 to 39,
wherein the prepreg b is disposed so as to be present at a position within 50% from an innermost side of the laminated sheet with respect to a thickness of the laminated sheet.
